# EUROPEAN PATENT APPLICATION

(11) **EP 4 794 408 A1**
(43) Date of publication of application: **19.08.2026**
(21) Application number: 24881637.3
(22) Date of filing: 23.10.2024
(51) Int. Cl.: H04W 56/00

(54) **METHOD AND APPARATUS FOR DETERMINING CELL TIMING**

(30) Priority: 26.10.2023 CN 202311405836
(71) Applicant: HUAWEI TECHNOLOGIES CO., LTD., Shenzhen, Guangdong 518129 (CN)
(72) Inventor: LI, Xinxian, Shenzhen, Guangdong 518129 (CN); DING, Mengying, Shenzhen, Guangdong 518129 (CN); PENG, Jinlin, Shenzhen, Guangdong 518129 (CN); ZHAI, Bangzhao, Shenzhen, Guangdong 518129 (CN)
(74) Representative: Thun, Clemens
(86) International application number: PCT/CN2024/126678
(87) International publication number: WO 2025/087273

(57) **Abstract**

A method for determining cell timing is provided. In this method, a base station indicates to a UE offset indication information, which includes an offset at slot granularity and an offset at Ts granularity, where Ts = 1/(15 * 10³ * 2048) seconds. This enables the UE to obtain a time offset between cells in a CA scenario, thereby improving communication performance.

## Description

This application claims priority to Chinese Patent Application No. 202311405836.5, filed with the China National Intellectual Property Administration on October 26, 2023 and entitled "CELL TIMING DETERMINING METHOD AND APPARATUS", which is incorporated herein by reference in its entirety.

### TECHNICAL FIELD

This application relates to the field of communication technologies, and in particular, to a cell timing determining method and an apparatus.

### BACKGROUND

Carrier aggregation (carrier aggregation, CA) is a key technology for overcoming bandwidth limitations of a single carrier. By aggregating two or more component carriers (component carriers, CCs), carrier aggregation enables a larger transmission bandwidth for a terminal device, thereby improving network resource utilization and improving user experience.

However, in CA technology, timings of frames between a plurality of aggregated carriers are not aligned. In such cases, how to determine the timings between the plurality of carriers is an urgent problem to be resolved.

### SUMMARY

According to a first aspect, an embodiment of this application provides a communication method. The method may be performed by a terminal, may be performed by a module (for example, a processor, a chip, or a chip system) used in the terminal, or may be implemented by a logical node, a logical module, or software that can implement all or some functions of the terminal. The method includes: receiving offset indication information, where the offset indication information indicates a first offset value x and a second offset value y, the first offset value x is an offset at slot slot granularity, and the second offset value y is an offset at Ts granularity, and Ts = 1/(15 ∗ 10³ ∗ 2048) seconds; and determining a time offset between a second cell and a first cell based on the offset indication information. The first cell is a primary cell (primary cell, PCell) or a primary secondary cell (primary secondary cell, PSCell), and the second cell is a secondary cell (secondary cell, SCell); or the first cell is an SCell, and the second cell is a PCell/PSCell. The time offset, indicated by the offset indication information, between the second cell and the first cell may be a time offset of the second cell relative to the first cell, or may be a time offset of the first cell relative to the second cell. The offset indication information may be carried in radio resource control (radio resource control, RRC) signaling. The time offset may be a time offset between a frame header of a radio frame i of the second cell and a frame header of a radio frame i of the first cell. i is a nonnegative integer.

According to the method, the terminal receives the offset indication information indicating the time offset between the second cell and the first cell, the offset indication information indicates the first offset value at slot granularity and the second offset value at Ts granularity, and the offset indication information accurately indicates the time offsets at slot granularity and at Ts granularity between the second cell and the first cell. This can effectively resolve a problem of communication performance deterioration caused by frame misalignment between the second cell and the first cell and achieve a beneficial effect of improved communication performance.

In some implementations of the first aspect, the offset indication information includes first indication information and second indication information. The first indication information indicates the first offset value x, the second indication information indicates the second offset value y, and determining the time offset between the second cell and the first cell based on the offset indication information includes: determining the time offset between the second cell and the first cell based on the first indication information and the second indication information.

In some implementations of the first aspect, a maximum value of the second offset value y is a quantity of Ts included in a slot corresponding to a reference subcarrier spacing (subcarrier spacing, SCS). The reference SCS is a maximum value between a minimum SCS in an SCS set of the first cell and a minimum SCS in an SCS set of the second cell. The SCS set of the first cell may be understood as a plurality of SCSs of the first cell, and the SCS set of the second cell may be understood as a plurality of SCSs of the second cell. The SCS set of the first cell or the SCS set of the second cell may be configured by using the RRC signaling.

In some implementations of the first aspect, when a combination of the minimum SCS in the SCS set of the first cell and the minimum SCS in the SCS set of the second cell is not {60 kHz, 60 kHz} or {120 kHz, 120 kHz}:

If a minimum SCS in an SCS set of the PCell/PSCell is less than or equal to a minimum SCS in an SCS set of the SCell, then Ts 0 of a slot 0 of the first cell is aligned with Ts y of a slot ((-1*x) mod M) of the second cell, where x represents the first offset value, y represents the second offset value, mod represents a modulo operation, M represents a quantity of slots included in a frame, a time domain length of the slot is determined based on the reference SCS, the first cell is the PCell/PSCell and the second cell is the SCell.

If a minimum SCS in an SCS set of the PCell/PSCell is greater than a minimum SCS in an SCS set of the SCell, then Ts 0 of a slot 0 of the first cell is aligned with Ts y of a slot (x mod M) of the second cell, where the first cell is the SCell and the second cell is the PCell/PSCell.

In some implementations of the first aspect, when a combination of the minimum SCS in the SCS set of the first cell and the minimum SCS in the SCS set of the second cell is {60 kHz, 60 kHz} or {120 kHz, 120 kHz}:

If a frequency domain position of a point A of the PCell/PSCell is lower than a frequency domain position of a point A of the SCell, then Ts 0 of a slot 0 of the first cell is aligned with Ts y of the slot ((-1*x) mod M) of the second cell, where the point A is a common reference point for a resource block grid and is aligned with a center position of a subcarrier 0 of a common resource block 0 corresponding to a configured SCS, the first cell is the PCell/PSCell, and the second cell is the SCell.

If a frequency domain position of a point A of the PCell/PSCell is higher than a frequency domain position of a point A of the SCell, then Ts 0 of a slot 0 of the first cell is aligned with Ts y of a slot (x mod M) of the second cell, where the first cell is the SCell and the second cell is the PCell/PSCell.

In some implementations of the first aspect, when a combination of the minimum SCS in the SCS set of the first cell and the minimum SCS in the SCS set of the second cell is not {60 kHz, 60 kHz} or {120 kHz, 120 kHz}:

The first cell is the PCell/PSCell, and the second cell is the SCell. In this case, if the minimum SCS in the SCS set of the first cell is less than or equal to the minimum SCS in the SCS set of the second cell, then Ts 0 of a slot 0 of the first cell is aligned with Ts y of the slot ((-1*x) mod M) of the second cell; or if the minimum SCS in the SCS set of the first cell is greater than the minimum SCS in the SCS set of the second cell, then Ts 0 of a slot 0 of the first cell is aligned with Ts y of the slot (x mod M) of the second cell.

Alternatively, the first cell is the SCell, and the second cell is the PCell/PSCell. In this case, if the minimum SCS in the SCS set of the first cell is less than the minimum SCS in the SCS set of the second cell, then Ts 0 of a slot 0 of the first cell is aligned with Ts y of the slot (x mod M) of the second cell; or if the minimum SCS in the SCS set of the first cell is greater than or equal to the minimum SCS in the SCS set of the second cell, then Ts 0 of a slot 0 of the first cell is aligned with Ts y of the slot ((-1*x) mod M) of the second cell.

In some implementations of the first aspect, when a combination of the minimum SCS in the SCS set of the first cell and the minimum SCS in the SCS set of the second cell is {60 kHz, 60 kHz} or {120 kHz, 120 kHz}:

The first cell is the PCell/PSCell, and the second cell is the SCell. In this case, if a frequency domain position of a point A of the first cell is lower than a frequency domain position of a point A of the second cell, then Ts 0 of a slot 0 of the first cell is aligned with Ts y of the slot ((-1*x) mod M) of the second cell; or if a frequency domain position of a point A of the first cell is higher than a frequency domain position of a point A of the second cell, then Ts 0 of a slot 0 of the first cell is aligned with Ts y of the slot (x mod M) of the second cell.

Alternatively, the first cell is the SCell, and the second cell is the PCell/PSCell. In this case, if a frequency domain position of a point A of the first cell is lower than or equal to a frequency domain position of a point A of the second cell, then Ts 0 of a slot 0 of the first cell is aligned with Ts y of the slot (x mod M) of the second cell; or if a frequency domain position of a point A of the first cell is higher than a frequency domain position of a point A of the second cell, then Ts 0 of a slot 0 of the first cell is aligned with Ts y of the slot ((-1*x) mod M) of the second cell.

According to a second aspect, an embodiment of this application provides a communication method. The method may be performed by a radio access network device, may be performed by a module (for example, a processor, a chip, or a chip system) used in the radio access network device, or may be implemented by a logical node, a logical module, or software that can implement all or some functions of the radio access network device. The method includes: determining offset indication information, where the offset indication information indicates a first offset value x and a second offset value y, the first offset value x is an offset at slot slot granularity, the second offset value y is an offset at Ts granularity, Ts = 1/(15 ∗ 10³ ∗ 2048) seconds, and the offset indication information indicates a time offset between the second cell and the first cell; and sending the offset indication information. The first cell is a PCell/PSCell, and the second cell is an SCell; or the first cell is an SCell, and the second cell is a PCell/PSCell. The time offset, indicated by the offset indication information, between the second cell and the first cell may be a time offset of the second cell relative to the first cell, or may be a time offset of the first cell relative to the second cell. The offset indication information may be carried in RRC signaling. The time offset may be a time offset between a frame header of a radio frame i of the second cell and a frame header of a radio frame i of the first cell. i is a nonnegative integer.

For beneficial effects of a feature corresponding to the second aspect, refer to related descriptions in the first aspect. Details are not described again.

In some implementations of the second aspect, the offset indication information includes first indication information and second indication information. The first indication information indicates the first offset value x, and the second indication information indicates the second offset value y. That the offset indication information indicates the time offset between the second cell and the first cell includes: The first indication information and the second indication information indicate the time offset between the second cell and the first cell.

In some implementations of the second aspect, a maximum value of the second offset value y is a quantity of Ts included in a slot corresponding to a reference SCS. The reference SCS is a maximum value between a minimum SCS in an SCS set of the first cell and a minimum SCS in an SCS set of the second cell. The SCS set of the first cell may be understood as a plurality of SCSs of the first cell, and the SCS set of the second cell may be understood as a plurality of SCSs of the second cell. The SCS set of the first cell or the SCS set of the second cell may be configured by using the RRC signaling.

In some implementations of the second aspect, when a combination of the minimum SCS in the SCS set of the first cell and the minimum SCS in the SCS set of the second cell is not {60 kHz, 60 kHz} or {120 kHz, 120 kHz}:

If a minimum SCS in an SCS set of the PCell/PSCell is less than or equal to a minimum SCS in an SCS set of the SCell, then Ts 0 of a slot 0 of the first cell is aligned with Ts y of a slot ((-1*x) mod M) of the second cell, where x represents the first offset value, y represents the second offset value, mod represents a modulo operation, M represents a quantity of slots included in a frame, a time domain length of the slot is determined based on the reference SCS, the first cell is the PCell/PSCell, and the second cell is the SCell.

If a minimum SCS in an SCS set of the PCell/PSCell is greater than a minimum SCS in an SCS set of the SCell, then Ts 0 of a slot 0 of the first cell is aligned with Ts y of a slot (x mod M) of the second cell, where the first cell is the SCell and the second cell is the PCell/PSCell.

In some implementations of the second aspect, when a combination of the minimum SCS in the SCS set of the first cell and the minimum SCS in the SCS set of the second cell is {60 kHz, 60 kHz} or {120 kHz, 120 kHz}:

If a frequency domain position of a point A of the PCell/PSCell is lower than a frequency domain position of a point A of the SCell, then Ts 0 of a slot 0 of the first cell is aligned with Ts y of the slot ((-1*x) mod M) of the second cell, where the first cell is the PCell/PSCell and the second cell is the SCell.

If a frequency domain position of a point A of the PCell/PSCell is higher than a frequency domain position of a point A of the SCell, then Ts 0 of a slot 0 of the first cell is aligned with Ts y of a slot (x mod M) of the second cell, where the first cell is the SCell and the second cell is the PCell/PSCell.

In some implementations of the second aspect, when a combination of the minimum SCS in the SCS set of the first cell and the minimum SCS in the SCS set of the second cell is not {60 kHz, 60 kHz} or {120 kHz, 120 kHz}:

The first cell is the PCell/PSCell, and the second cell is the SCell. In this case, if the minimum SCS in the SCS set of the first cell is less than or equal to the minimum SCS in the SCS set of the second cell, then Ts 0 of a slot 0 of the first cell is aligned with Ts y of the slot ((-1*x) mod M) of the second cell; or if the minimum SCS in the SCS set of the first cell is greater than the minimum SCS in the SCS set of the second cell, then Ts 0 of a slot 0 of the first cell is aligned with Ts y of the slot (x mod M) of the second cell.

Alternatively, the first cell is the SCell, and the second cell is the PCell/PSCell. In this case, if the minimum SCS in the SCS set of the first cell is less than the minimum SCS in the SCS set of the second cell, then Ts 0 of a slot 0 of the first cell is aligned with Ts y of the slot (x mod M) of the second cell; or if the minimum SCS in the SCS set of the first cell is greater than or equal to the minimum SCS in the SCS set of the second cell, then Ts 0 of a slot 0 of the first cell is aligned with Ts y of the slot ((-1*x) mod M) of the second cell.

In some implementations of the second aspect, when a combination of the minimum SCS in the SCS set of the first cell and the minimum SCS in the SCS set of the second cell is {60 kHz, 60 kHz} or {120 kHz, 120 kHz}:

The first cell is the PCell/PSCell, and the second cell is the SCell. In this case, if a frequency domain position of a point A of the first cell is lower than a frequency domain position of a point A of the second cell, then Ts 0 of a slot 0 of the first cell is aligned with Ts y of the slot ((-1*x) mod M) of the second cell; or if a frequency domain position of a point A of the first cell is higher than a frequency domain position of a point A of the second cell, then Ts 0 of a slot 0 of the first cell is aligned with Ts y of the slot (x mod M) of the second cell.

Alternatively, the first cell is the SCell, and the second cell is the PCell/PSCell. In this case, if a frequency domain position of a point A of the first cell is lower than or equal to a frequency domain position of a point A of the second cell, then Ts 0 of a slot 0 of the first cell is aligned with Ts y of the slot (x mod M) of the second cell; or if a frequency domain position of a point A of the first cell is higher than a frequency domain position of a point A of the second cell, then Ts 0 of a slot 0 of the first cell is aligned with Ts y of the slot ((-1*x) mod M) of the second cell.

According to a third aspect, an embodiment of this application provides an apparatus, to implement the method according to the first aspect or any one of the possible implementations of the first aspect. The apparatus includes a corresponding unit or module configured to perform the method. The unit or module included in the apparatus can be implemented by using software and/or hardware. The apparatus may be, for example, a terminal, or may be a chip, a chip system, a processor, or the like that supports the terminal in implementing the method, or may be a logical node, a logical module, or software that can implement all or some functions of the terminal.

According to a fourth aspect, an embodiment of this application provides an apparatus, to implement the method according to the second aspect or any one of the possible implementations of the second aspect. The apparatus includes a corresponding unit or module configured to perform the method. The unit or module included in the apparatus can be implemented by using software and/or hardware. The apparatus may be, for example, a radio access network device, may be a chip, a chip system, a processor, or the like that supports the radio access network device in implementing the method, or may be a logical node, a logical module, or software that can implement all or some functions of the radio access network device.

According to a fifth aspect, an embodiment of this application provides an apparatus, including a processor. The processor is coupled to a memory. The memory is configured to store instructions. When the instructions are executed by the processor, the apparatus is enabled to implement the method according to the first aspect or any one of the possible implementations of the first aspect.

According to a sixth aspect, an embodiment of this application provides an apparatus, including a processor. The processor is coupled to a memory. The memory is configured to store instructions. When the instructions are executed by the processor, the apparatus is enabled to implement the method according to the second aspect or any one of the possible implementations of the second aspect.

According to a seventh aspect, an embodiment of this application provides a computer-readable storage medium. The computer readable storage medium stores instructions. When the instructions are executed by a communication apparatus, the communication apparatus is enabled to perform the method according to the first aspect or any one of the possible implementations of the first aspect, or perform the method according to the second aspect or any one of the possible implementations of the second aspect.

According to an eighth aspect, an embodiment of this application provides a computer program product. The computer program product includes computer program code. When the computer program code is run on a communication apparatus, the communication apparatus is enabled to perform the method according to the first aspect or any one of the possible implementations of the first aspect, or perform the method according to the second aspect or any one of the possible implementations of the second aspect.

According to a ninth aspect, an embodiment of this application provides a chip, including a processor. The processor is coupled to a memory. The memory is configured to store instructions. When the instructions are executed by the processor, the chip is enabled to implement the method according to the first aspect, the second aspect, any one of the possible implementations of the first aspect, or any one of the possible implementations of the second aspect.

According to a tenth aspect, an embodiment of this application provides a communication system, including the apparatus according to the third aspect and the apparatus according to the fourth aspect, or including the apparatus according to the fifth aspect and the apparatus according to the sixth aspect.

It may be understood that, for beneficial effects of features in the third aspect to the tenth aspect that correspond to those in the first aspect and the second aspect, refer to related descriptions in the first aspect and the second aspect. Details are not described again.

### BRIEF DESCRIPTION OF DRAWINGS

FIG. 1 is a diagram of a communication system to which an embodiment of this application is applied;
FIG. 2 is a diagram of indicating slot-level offsets between a plurality of cells in a CA scenario;
FIG. 3 is a diagram of a communication method according to an embodiment of this application;
FIG. 4 is a diagram of a structure of a terminal according to an embodiment of this application;
FIG. 5 is a diagram of a structure of an apparatus according to an embodiment of this application; and
FIG. 6 is a diagram of another apparatus according to an embodiment of this application.

### DESCRIPTION OF EMBODIMENTS

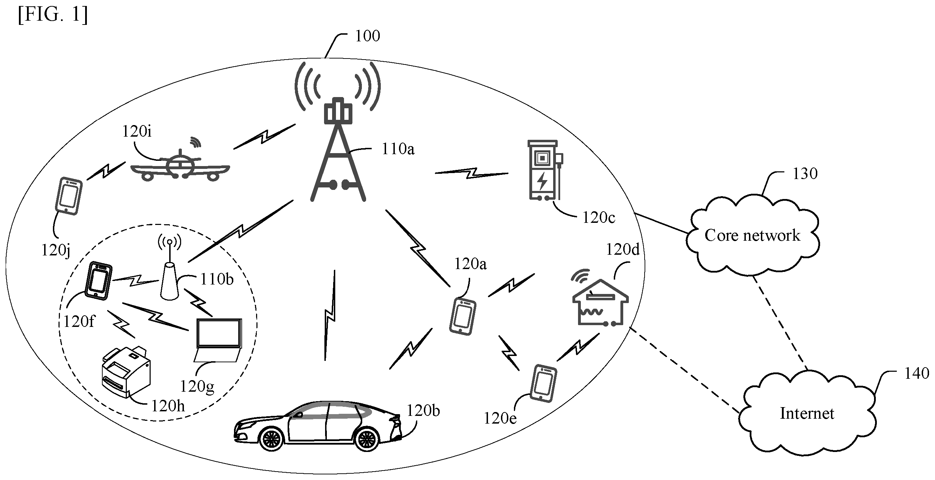

FIG. 1 is a diagram of an architecture of a communication system to which an embodiment of this application is applied. As shown in FIG. 1, the communication system includes a radio access network (radio access network, RAN) 100 and a core network (core network, CN) 130. Optionally, the communication system may further include the internet 140. The RAN 100 may include at least one RAN node (for example, 110a and 110b in FIG. 1, collectively referred to as 110) and at least one terminal (for example, 120a to 120j in FIG. 1, collectively referred to as 120). The RAN 100 may further include another RAN node. The terminal 120 is connected to the RAN node 110 in a wireless manner. The RAN node 110 is connected to the core network 130 in a wireless or wired manner. A core network device in the core network 130 and the RAN node 110 in the RAN 100 may be different independent physical devices, may be a same physical device that integrates a logical function of the core network and a logical function of the radio access network, or may be a device that integrates some logical functions of the core network and some logical functions of the radio access network. Terminals may be connected to each other in a wired or wireless manner, and RAN nodes may be connected to each other in a wired or wireless manner. FIG. 1 is merely a diagram. The communication system may further include another network device, for example, may further include a relay device and a backhaul device, which are not shown in FIG. 1.

A method and an apparatus that are provided in embodiments of this application may be used in various communication systems, for example, a 4th generation (4th generation, 4G) communication system, a 4.5G communication system, a 5G communication system, a 5.5G communication system, a 6G communication system, a system integrating a plurality of communication systems, or a future evolved communication system. For example, the communication systems are a long term evolution (long term evolution, LTE) system, a new radio (new radio, NR) system, an open access network (open RAN, O-RAN, or ORAN) system, a cloud radio access network (cloud radio access network, CRAN) system, a communication system related to a 3rd generation partnership project (3rd generation partnership project, 3GPP), another communication system of this type, and a communication system integrating the foregoing two or more systems.

The RAN node may also have a different expression, for example, a radio access network device. In this application, unless otherwise specified, the term radio access network device is used subsequently. The radio access network device (also sometimes referred to as a network device in this application) may be a base station (base station), an evolved NodeB (evolved NodeB, eNodeB), a transmission-reception point (transmission-reception point, TRP), a next generation NodeB (next generation NodeB, gNB) in a 5G mobile communication system, a next-generation base station in a 6G mobile communication system, a base station in a future mobile communication system, or the like. The radio access network device may be a macro base station (for example, 110a in FIG. 1), may be a micro base station or an indoor base station (for example, 110b in FIG. 1), may be a relay node or a donor node, or may be a radio controller in a CRAN scenario. Optionally, the radio access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU). It may be understood that all or some functions of the radio access network device in this application may alternatively be implemented by using a software function running on hardware, or may be implemented by using an instantiated virtualization function on a platform (for example, a cloud platform). Alternatively, the radio access network device in this application may be a logical node, a logical module, or software that can implement all or some functions of the radio access network device.

The radio access network device may alternatively be a module or a unit that completes some functions of the base station, for example, may be a central unit (central unit, CU) or may be a distributed unit (distributed unit, DU). In another possible scenario, a plurality of radio access network devices cooperate to assist the terminal in implementing radio access, and different radio access network devices respectively implement some functions of the base station. For example, the radio access network device may be a CU, a DU, a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an open central unit (open central unit, O-CU), the DU may also be referred to as an open distributed unit (open distributed unit, O-DU), the CU-CP may also be referred to as an O-CU-CP, the CU-UP may also be referred to as an O-CU-UP, and the RU may also be referred to as an O-RU. For ease of description, the DU and the RU are used as examples for description in this application. Either unit of the DU and the RU in this application may be implemented by using a software module, a hardware module, or a combination of a software module and a hardware module. A specific technology and a specific device form that are used by the radio access network device are not limited in embodiments of this application. For ease of description, an example in which the base station is used as the radio access network device is used for description below.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial machine, a helicopter, an airplane, a ship, a robot, a robot arm, a smart home device, or the like. A specific technology and a specific device form that are used by the terminal are not limited in embodiments of this application.

Alternatively, the terminal in this application may be a VR terminal, an AR terminal, or an MR terminal. The VR terminal, the AR terminal, and the MR terminal each may be referred to as an XR terminal. The XR terminal may be, for example, a head-mounted device (for example, a helmet or glasses), may be an all-in-one machine, or may be a television, a display, an automobile, a vehicle-mounted device, a tablet, a smart screen, or the like. The XR terminal can present XR data to a user, and the user can experience diversified XR services by wearing or using the XR terminal. The XR terminal may access a network in a wireless or wired manner, for example, access the network through the Wi-Fi system, the 5G system, or another system.

The base station and the terminal may be at fixed positions or may be movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, the airplane or the uncrewed aerial machine 120i in FIG. 1 may be configured as a mobile base station. For those terminals 120j that access the radio access network 100 through 120i, the terminal 120i is a base station. However, for the base station 110a, 120i is a terminal, that is, 110a and 120i communicate with each other based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of the base station, and 120a to 120j each in FIG. 1 may be referred to as a communication apparatus having a function of the terminal.

Communication between the base station and the terminal, between the base station and the base station, or between the terminal and the terminal may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing terminal application scenarios, such as a smart grid, industrial control, smart transportation, and a smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. The terminal sends a sidelink (sidelink) signal or sidelink information to a terminal, where the sidelink information is carried on a sidelink channel. The information may be control information, or may be data information.

A cell is a radio coverage area identified by a base station identity code or a cell global identity. It may be simply understood as that the cell is an area in which the base station provides radio coverage. For example, in the NR system, the terminal being connected to a cell may be understood as that the cell is a serving cell of the terminal, and the terminal implements data transmission with a radio access network device by using a resource provided by the cell. The resource may include one or more of a time domain resource, a frequency domain resource, or a space domain resource. A carrier is a radio signal (for example, an electromagnetic wave) that is transmitted from the base station to carry information and that has a specific frequency, bandwidth, and standard, and may also be referred to as a CC or a carrier frequency.

With the continuous emergence of new services such as a high-definition video and AR/VR, a demand for wireless data traffic is increasing rapidly. To meet an increasing demand for wireless transmission, wireless communication technologies need to be further evolved to improve a network capacity and a transmission rate of a wireless network. In an evolution direction of wireless communication technologies, further exploiting frequency resources of wireless communication is an extremely important dimension. A larger transmission bandwidth can provide a larger network capacity and a higher transmission rate. Due to limited spectrum bandwidth resources for actual deployment and a processing capability of the terminal, large-bandwidth contiguous spectrum resources are extremely scarce. In other words, a bandwidth of a single carrier is limited.

CA is a key technology for overcoming bandwidth limitations of a single carrier. By aggregating two or more CCs, CA enables a larger transmission bandwidth for the terminal device. The CA technology can implement integration of a plurality of frequency domain resources by aggregating frequency domain resources in a same frequency band or different frequency bands for use by the terminal, thereby improving resource utilization of an entire network and improving user experience.

In a CA scenario, the terminal may be connected to a plurality of cells, including a primary cell (primary cell, PCell) and a secondary cell (secondary cell, SCell). The PCell may be a cell established for initial access between the terminal and the radio access network device, or may be a cell re-established for an RRC connection between the terminal and the radio access network device, or may be a cell specified in a handover process. The SCell is a cell configured by the radio access network device for the terminal, to provide an additional transmission resource. The SCell may be a cell added during RRC reconfiguration. The CA scenario may further include a primary secondary cell (primary secondary cell, PSCell). The PSCell is a secondary cell group cell in which the terminal performs random access during a synchronous reconfiguration process when the terminal is configured with dual connectivity. Each downlink carrier corresponds to an independent cell. It may also be understood that a cell includes only one downlink carrier. Usually, a downlink carrier may be equivalent to a cell. A cell may include only one downlink carrier, or may include one downlink carrier and one uplink carrier, or may include one downlink carrier and two uplink carriers. In this application, if logic does not conflict, a cell, a carrier, and a CC may be used interchangeably.

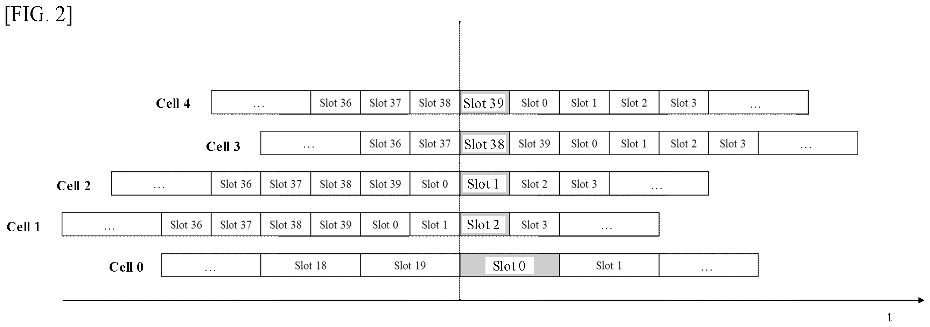

The CA technology supports a scenario in which frames of a plurality of carriers for carrier aggregation are not aligned. In this scenario, the radio access network device may indicate, by sending offset indication information, a slot (slot)-level offset of a cell A serving the terminal relative to a cell B serving the terminal. For example, as shown in FIG. 2, cells 0 to 4 are serving cells of the terminal. An SCS of the cell 0 is 30 kHz, and a frame includes 20 slots. SCSs of the cells 1 to 4 are 60 kHz, and each frame includes 40 slots. A frame i of the cells 1 to 4 is not aligned with a frame i of the cell 0. i is a nonnegative integer. The radio access network device indicates, by sending the offset indication information, that a slot 0 in a frame i+1 of the cell 0 is aligned with a slot 39 in the frame i of the cell 4. This may also be understood that a slot 0 in a frame i+1 of the cell 4 is delayed by one slot corresponding to an SCS of 60 kHz relative to the slot 0 in the frame i+1 of the cell 0. The radio access network device indicates, by sending the offset indication information, that the slot 0 in the frame i+1 of the cell 0 is aligned with a slot 38 in the frame i of the cell 3. This may also be understood that a slot 0 in a frame i+1 of the cell 3 is delayed by two slots corresponding to the SCS of 60 kHz relative to the slot 0 in the frame i+1 of the cell 0. The radio access network device indicates, by sending the offset indication information, that the slot 0 in the frame i+1 of the cell 0 is aligned with a slot 1 in a frame i+1 of the cell 2. This may also be understood that a slot 0 in the frame i+1 of the cell 2 is advanced by one slot corresponding to the SCS of 60 kHz relative to the slot 0 in the frame i+1 of the cell 0. The radio access network device indicates, by sending the offset indication information, that the slot 0 in the frame i+1 of the cell 0 is aligned with a slot 2 in a frame i+1 of the cell 1. This may also be understood that a slot 0 in the frame i+1 of the cell 1 is advanced by two slots corresponding to the SCS of 60 kHz relative to the slot 0 in the frame i+1 of the cell 0. In this application, unless otherwise specified, i in a slot i, the frame i, or a Ts i is a sequence number or an index corresponding to a slot, a frame, or Ts, i is a nonnegative integer, and Ts = 1/(15 ∗ 10³ ∗ 2048) seconds.

Currently, the radio access network device only supports an indication of a slot-level offset of the cell A serving the terminal relative to the cell B serving the terminal. When the offset of the cell A relative to the cell B is not an integer multiple of a slot, the radio access network device cannot correctly indicate a time offset of the cell A relative to the cell B. Accordingly, the terminal cannot correctly obtain the time offset of the cell A serving the terminal relative to the cell B serving the terminal. As a result, an error occurs during data transmission, and communication performance is affected. Communication performance in the CA scenario is closely related to a frame alignment status between a plurality of carriers or cells that support CA. Therefore, how to determine timing between the plurality of carriers or cells in the CA scenario is an urgent problem to be resolved.

This application provides a method for determining cell timing. The base station indicates to a UE offset indication information, which including an offset at slot granularity and an offset at Ts granularity (Ts = 1/(15 ∗ 10³ ∗ 2048) seconds). This enables the UE to obtain a time offset between cells in the CA scenario. This effectively alleviates a problem of communication performance deterioration caused by frame misalignment between a plurality of cells supported by CA, and achieves a beneficial effect of improved communication performance.

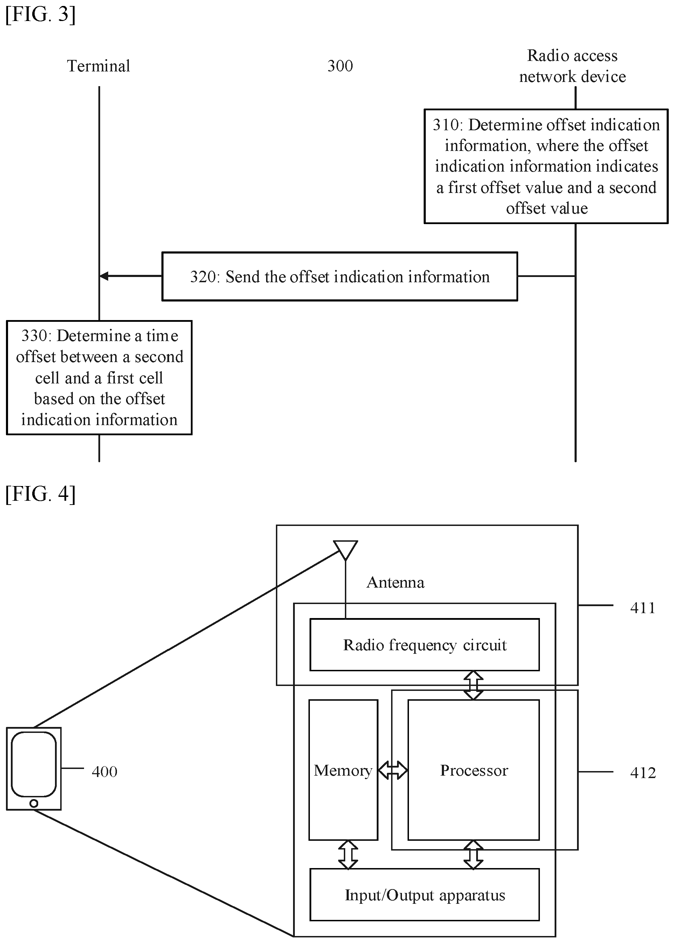

FIG. 3 is an interaction diagram of a communication method 300 according to an embodiment of this application. In FIG. 3, the method is illustrated by using an example in which a radio access network device and a terminal perform interaction. However, an execution entity of the interaction is not limited in this application. For example, the radio access network device in FIG. 3 may alternatively be a module (for example, a chip, a chip system, or a processor) used in the radio access network device, or may be a logical node, a logical module, or software that can implement all or some functions of the radio access network device. The terminal in FIG. 3 may alternatively be a module (for example, a chip, a chip system, or a processor) used in the terminal, or may be a logical node, a logical module, or software that can implement all or some functions of the terminal. As shown in FIG. 3, the method 300 in this embodiment may include a part 310, a part 320, and a part 330.

Part 310: The radio access network device determines offset indication information. The offset indication information indicates a first offset value x and a second offset value y. The first offset value x is an offset at slot slot granularity, the second offset value y is an offset at Ts granularity, Ts = 1/(15 ∗ 10³ ∗ 2048) seconds, and the offset indication information indicates a time offset between a second cell and a first cell. The first cell is a primary cell (primary cell, PCell) or a primary secondary cell (primary secondary cell, PSCell), and the second cell is a secondary cell (secondary cell, SCell); or the first cell is an SCell, and the second cell is a PCell/PSCell. It may also be understood that one of the first cell and the second cell is the PCell/PSCell, and the other cell is the SCell. The time offset, indicated by the offset indication information, between the second cell and the first cell may be a time offset of the second cell relative to the first cell, or may be a time offset of the first cell relative to the second cell. The time offset may be a time offset between a frame header of a radio frame i of the second cell and a frame header of a radio frame i of the first cell. i is a nonnegative integer.

Part 320: The radio access network device sends the offset indication information to the terminal, and correspondingly, the terminal receives the offset indication information from the radio access network device. The offset indication information may be carried in RRC signaling. The radio access network device may send the offset indication information to the terminal by using the first cell, or may send the offset indication information to the terminal by using the second cell.

Part 330: The terminal determines the time offset between the second cell and the first cell based on the offset indication information.

In the method 300, the terminal receives the offset indication information indicating the time offset between the second cell and the first cell, the offset indication information indicates the first offset value at slot granularity and the second offset value at Ts granularity, the offset indication information accurately indicates the time offsets at slot granularity and at Ts granularity between the second cell and the first cell, and Ts = 1/(15 * 10³ * 2048) seconds. This can effectively resolve a problem of communication performance deterioration caused by frame misalignment between the second cell and the first cell.

In this application, "sending information to... (the terminal)" may be understood as that a destination end of the information is the terminal, and may include directly or indirectly sending the information to the terminal. "Receiving ... information from (the radio access network device)" may be understood as that a source end of the information is the radio access network device, and may include directly or indirectly receiving the information from the radio access network device. Necessary processing, for example, a format change, may be performed on the information between the source end and the destination end between which the information is sent, but the destination end can understand valid information from the source end. A similar expression in this application may be understood similarly. Details are not described herein again.

The offset indication information may include first indication information and second indication information. The first indication information indicates the first offset value x, and the second indication information indicates the second offset value y. The terminal then may determine the time offset between the second cell and the first cell based on the first indication information and the second indication information.

In a possible implementation, a maximum value of the second offset value y is a quantity of Ts included in a slot corresponding to a reference SCS. The reference SCS is a maximum value between a minimum SCS in an SCS set of the first cell and a minimum SCS in an SCS set of the second cell. The SCS set of the first cell may be understood as a plurality of SCSs configured for the first cell, and the SCS set of the second cell may be understood as a plurality of SCSs configured for the second cell. The SCS set of the first cell or the SCS set of the second cell may be configured by using RRC signaling. A possible information element structure is as follows:

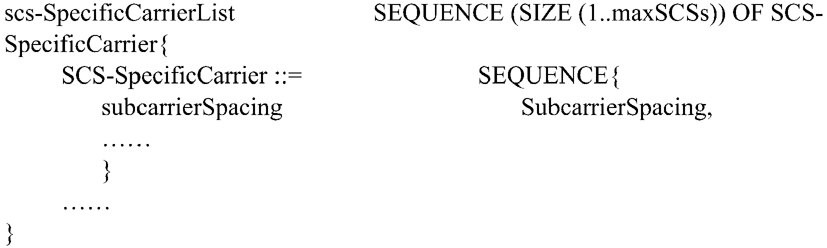

An scs-SpecificCarrierList information element is used to configure an SCS set, and a SubcarrierSpacing information element in an SCS-SpecificCarrier information element is used to configure an SCS in the SCS set. A minimum quantity of SCS-SpecificCarrier information elements included in the scs-SpecificCarrierList information element is 1, and a maximum quantity is maxSCSs. It may also be understood that a minimum quantity of SCSs included in the SCS set is 1, and a maximum quantity of SCSs included in the SCS set is maxSCSs, where maxSCSs may be 5.

Optionally, different slots corresponding to the reference SCS (for example, a slot i and a slot j corresponding to the reference SCS, where i and j are integers, and i is not equal to j) may include different quantities of Ts. For example, a slot corresponding to a reference SCS of 60 kHz may include 7688 Ts or 7672 Ts. In this case, a slot corresponding to the reference SCS refers to a slot including 7688 Ts. In other words, the slot corresponding to the reference SCS is a slot including a maximum quantity of Ts among the slots corresponding to the reference SCS.

For example, the SCS set of the first cell is {30 kHz, 60 kHz}, the SCS set of the second cell is {60 kHz, 120 kHz}. The reference SCS is a maximum value, 60 kHz in this case, between a minimum value 30 kHz in the SCS set {30 kHz, 60 kHz} and a minimum value 60 kHz in the SCS set {60 kHz, 120 kHz}. The maximum value of the second offset value y is a quantity of Ts included in a slot that includes a maximum quantity of Ts among slots corresponding to the reference SCS of 60 kHz.

The first indication information and the second indication information may be carried in the RRC signaling. A possible information element structure is as follows:

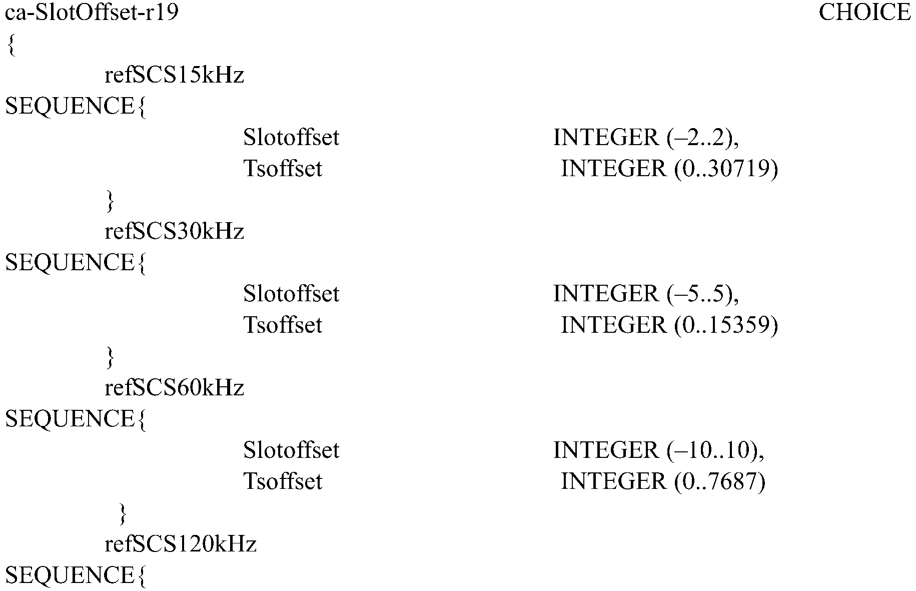

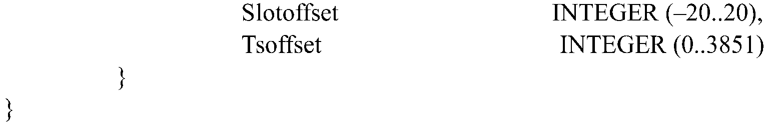

The first indication information may be a Slotoffset information element, which is included in a ca-SlotOffset-r19 information element. The second indication information may be a Tsoffset information element, which is also included in the ca-SlotOffset-r19 information element. refSCS15kHz, refSCS30kHz, refSCS60kHz, and refSCS120kHz respectively represent information elements corresponding to reference SCSs of 15 kHz, 30 kHz, 60 kHz, and 120 kHz, and these information elements include the first indication information and the second indication information. Quantities of Ts included in slots corresponding to the reference SCSs of 15 kHz, 30 kHz, 60 kHz, and 120 kHz are 30719, 15359, 7687, and 3851, respectively. When the reference SCS is 15 kHz, the first indication information Slotoffset is INTEGER (-2..2), which may also be understood as that the first indication information Slotoffset indicates an integer between -2 and 2 (both inclusive); and the second indication information Tsoffset is INTEGER (0..30719), which may also be understood as that the second indication information Tsoffset indicates an integer between 0 and 30719 (both inclusive). Cases for the reference SCSs of 30 kHz, 60 kHz, and 120 kHz are similar. Details are not described herein again. It may be understood that a specific parameter name illustrated in this application is merely used as an example, and a related parameter name is not limited.

In a possible implementation, when a combination of the minimum SCS in the SCS set of the first cell and the minimum SCS in the SCS set of the second cell is not {60 kHz, 60 kHz} or {120 kHz, 120 kHz}:

If a minimum SCS in an SCS set of the PCell/PSCell is less than or equal to a minimum SCS in an SCS set of the SCell, then Ts 0 of a slot 0 of the first cell is aligned with Ts y of a slot ((-1*x) mod M) of the second cell, where x represents the first offset value, y represents the second offset value, mod represents a modulo operation, M represents a quantity of slots included in a frame, a time domain length of the slot is determined based on the reference SCS, the first cell is the PCell/PSCell, and the second cell is the SCell. It may also be understood that, if the first cell is the PCell/PSCell, the second cell is the SCell, and the minimum SCS in the SCS set of the first cell is less than or equal to the minimum SCS in the SCS set of the second cell, then the Ts 0 of the slot 0 of the first cell is aligned with the Ts y of the slot ((-1*x) mod M) of the second cell.

If a minimum SCS in an SCS set of the PCell/PSCell is greater than a minimum SCS in an SCS set of the SCell, then Ts 0 of a slot 0 of the first cell is aligned with Ts y of a slot (x mod M) of the second cell, where the first cell is the SCell and the second cell is the PCell/PSCell. It may also be understood that, if the first cell is the SCell, the second cell is the PCell/PSCell, and the minimum SCS in the SCS set of the second cell is greater than the minimum SCS in the SCS set of the first cell, then the Ts 0 of the slot 0 of the first cell is aligned with the Ts y of the slot (x mod M) of the second cell.

For example, the first cell is the PCell, the second cell is the SCell, the minimum SCS in the SCS set of the first cell is 30 kHz, and the minimum SCS in the SCS set of the second cell is 120 kHz. The time offset of the second cell relative to the first cell is 2.3 ms. The first offset value that is indicated by the offset indication information carried in the RRC signaling and that is at slot granularity is 18, and the second offset value that is indicated by the offset indication information carried in the RRC signaling and that is at Ts granularity is 1528. The Ts 0 of the slot 0 of the first cell is aligned with Ts 1528 of a slot 18 of the second cell.

In another possible implementation, when a combination of the minimum SCS in the SCS set of the first cell and the minimum SCS in the SCS set of the second cell is {60 kHz, 60 kHz} or {120 kHz, 120 kHz}:

If a frequency domain position of a point A of the PCell/PSCell is lower than a frequency domain position of a point A of the SCell, then Ts 0 of a slot 0 of the first cell is aligned with Ts y of a slot ((-1*x) mod M) of the second cell, where the point A is a common reference point for a resource block grid and is aligned with a center position of a subcarrier 0 of a common resource block 0 corresponding to a configured SCS, the first cell is the PCell/PSCell, and the second cell is the SCell. It may also be understood that, if the first cell is the PCell/PSCell, the second cell is the SCell, and the frequency domain position of the point A of the first cell is lower than the frequency domain position of the point A of the second cell, then the Ts 0 of the slot 0 of the first cell is aligned with the Ts y of the slot ((-1*x) mod M) of the second cell. For details about the point A, refer to section 4.4.4.2 in 3GPP technical specification (technical specification, TS) 38.211 V17.5.0.

If a frequency domain position of a point A of the PCell/PSCell is higher than a frequency domain position of a point A of the SCell, then Ts 0 of a slot 0 of the first cell is aligned with Ts y of a slot (x mod M) of the second cell, where the first cell is the SCell and the second cell is the PCell/PSCell. It may also be understood that, if the first cell is the SCell, the second cell is the PCell/PSCell, and the frequency domain position of the point A of the second cell is higher than the frequency domain position of the point A of the first cell, then the Ts 0 of the slot 0 of the first cell is aligned with the Ts y of the slot (x mod M) of the second cell.

Optionally, the second offset value in this application may alternatively be a time domain offset at Tc granularity, where Tc = Ts/64 and Ts = 1/(15 * 10³ * 2048) seconds.

This application provides a method for determining cell timing. The method includes: The radio access network device determines second offset indication information. The second offset indication information indicates a third offset value and a fourth offset value. The third offset value is an offset at slot granularity, the fourth offset value is an offset at Ts granularity, and Ts = 1/(15 * 10³ * 2048) seconds. The second offset indication information indicates a time offset between a third cell and a fourth cell. The fourth cell is the PCell/PSCell, and the third cell is the SCell; or the fourth cell is the SCell, and the third cell is the PCell/PSCell. It may also be understood that one of the third cell and the fourth cell is the PCell/PSCell, and the other cell is the SCell. The time offset, indicated by the second offset indication information, between the third cell and the fourth cell may be a time offset of the third cell relative to the fourth cell, or may be a time offset of the fourth cell relative to the third cell. The time offset may be a time offset between a frame header of a radio frame i of the third cell and a frame header of a radio frame i of the fourth cell. i is a nonnegative integer. The radio access network device sends the second offset indication information to the terminal, and the terminal determines the time offset between the third cell and the fourth cell based on the second offset indication information.

The method further includes: The radio access network device determines third offset indication information. The third offset indication information indicates a fifth offset value and a sixth offset value. The fifth offset value is an offset at slot granularity, and the sixth offset value is an offset at Ts granularity. The third offset indication information indicates a time offset between the fifth cell and the sixth cell. The sixth cell is the PCell/PSCell, and the fifth cell is the SCell; or the sixth cell is the SCell, and the fifth cell is the PCell/PSCell. It may also be understood that one of the fifth cell and the sixth cell is the PCell/PSCell, and the other cell is the SCell. The time offset, indicated by the third offset indication information, between the fifth cell and the sixth cell may be a time offset of the fifth cell relative to the sixth cell, or may be a time offset of the sixth cell relative to the fifth cell. The time offset may be a time offset between a frame header of a radio frame i of the fifth cell and a frame header of a radio frame i of the sixth cell. i is a nonnegative integer. The radio access network device sends the third offset indication information to the terminal, and the terminal determines the time offset between the fifth cell and the sixth cell based on the third offset indication information. Two cells of the third cell, the fourth cell, the fifth cell, and the sixth cell are the same and are the PCell/PSCell.

In a possible implementation, a slot index Kₛ for sending a physical downlink shared channel (physical downlink shared channel, PDSCH) in the third cell is determined based on the fifth offset value, the sixth offset value, the third offset value, and the fourth offset value. The slot index Kₛ satisfies: $\begin{matrix}{K}_{s} = \left⌊n⋅\frac{{2}^{{μ}_{PDSCH}}}{{2}^{{μ}_{PDCCH}}}\right⌋ + {K}_{0} + \left⌊{2}^{{μ}_{PDSCH}}⋅\left(\frac{{N}_{slot , offset , PDCCH}^{CA}}{{2}^{{μ}_{offset , PDCCH}}}-\frac{{N}_{slot , offset , PDSCH}^{CA}}{{2}^{{μ}_{offset , PDSCH}}}\right)\right⌋ \\ + \left⌊\left|\frac{{N}_{Ts , offset , PDCCH} - {N}_{Ts , offset , PDSCH}}{T}\right|\right⌋\end{matrix}$

n represents a slot index of a physical downlink control channel (physical downlink control channel, PDCCH) carrying downlink control information (downlink control information, DCI), where the PDCCH is sent in the fifth cell; µ_{PDSCH} represents an SCS index of the PDSCH, where the PDSCH scheduled by the DCI is sent in the third cell; µ_{PDCCH} represents an SCS index of the PDCCH; K₀ represents a quantity of slots between the PDCCH and the PDSCH, with an SCS that corresponds to the PDSCH being used as a reference; ${N}_{slot , offset , PDCCH}^{CA}$ represents the fifth offset value; ${N}_{slot , offset , PDSCH}^{CA}$ represents the third offset value; µ_{offset,PDCCH} represents a maximum value between a minimum SCS in an SCS set of the sixth cell and a minimum SCS in an SCS set of the fifth cell; µ_{offset,PDSCH} represents a maximum value between a minimum SCS in an SCS set of the fourth cell and a minimum SCS in an SCS set of the third cell; *N*_{Ts,offset,PDCCH} represents the sixth offset value; *N*_{Ts,offset,PDSCH} represents the fourth offset value; *T* represents a quantity of Ts included in a slot with a maximum length among slots corresponding to the SCS of the PDSCH or a quantity of Ts included in a slot with a minimum length among slots corresponding to the SCS of the PDSCH; $\left⌊⋅\right⌋$ represents a round-down operation; and |·| represents an operation of obtaining an absolute value.

Optionally, $\left⌊\left|\frac{{N}_{Ts , offset , PDCCH} - {N}_{Ts , offset , PDSCH}}{T}\right|\right⌋$ in the foregoing embodiment may also be replaced with $\left⌈\left|\frac{{N}_{Ts , offset , PDCCH} - {N}_{Ts , offset , PDSCH}}{T}\right|\right⌉$, and $\left⌈⋅\right⌉$ represents a round-up operation.

In a possible implementation, a slot index Kₛ for sending a channel state information reference signal (channel state information reference signal, CSI-RS) in the third cell is determined based on the fifth offset value, the sixth offset value, the third offset value, and the fourth offset value. The slot index Kₛ satisfies: $\begin{matrix}{K}_{s} = \left⌊n⋅\frac{{2}^{{μ}_{CSIRS}}}{{2}^{{μ}_{PDCCH}}}\right⌋ + X + \left⌊{2}^{{μ}_{CSIRS}}⋅\left(\frac{{N}_{slot , offset , PDCCH}^{CA}}{{2}^{{μ}_{offset , PDCCH}}}-\frac{{N}_{slot , offset , CSIRS}^{CA}}{{2}^{{μ}_{offset , CSIRS}}}\right)\right⌋ \\ + \left⌊\left|\frac{{N}_{Ts , offset , PDCCH} - {N}_{Ts , offset , CSIRS}}{T}\right|\right⌋\end{matrix}$

n represents a slot index of a PDCCH carrying DCI, where the PDCCH is sent in the fifth cell; µ_{CSIRS} represents an SCS index of the CSI-RS, where the CSI-RS triggered by the DCI is sent in the third cell; µ_{PDCCH} represents an SCS index of the PDCCH; *X* represents a quantity of slots between the PDCCH and the CSI-RS, with an SCS that corresponds to the CSI-RS being used as a reference; ${N}_{slot , offset , PDCCH}^{CA}$ represents the fifth offset value; ${N}_{slot , offset , CSIRS}^{CA}$ represents the third offset value; µ_{offset,PDCCH} represents a maximum value between a minimum SCS in an SCS set of the sixth cell and a minimum SCS in an SCS set of the fifth cell; µ_{offset,CSIRS} represents a maximum value between a minimum SCS in an SCS set of the fourth cell and a minimum SCS in an SCS set of the third cell; *N*_{Ts,offset,PDCCH} represents the sixth offset value; *N*_{Ts,offset,CSIRS} represents the fourth offset value; *T* represents a quantity of Ts included in a slot with a maximum length among slots corresponding to the SCS of the CSI-RS or a quantity of Ts included in a slot with a minimum length among slots corresponding to the SCS of the CSI-RS; $\left⌊⋅\right⌋$ represents a round-down operation; and |·| represents an operation of obtaining an absolute value.

Optionally, $\left⌊\left|\frac{{N}_{Ts , offset , PDCCH} - {N}_{Ts , offset , CSIRS}}{T}\right|\right⌋$ in the foregoing embodiment may also be replaced with $\left⌈\left|\frac{{N}_{Ts , offset , PDCCH} - {N}_{Ts , offset , CSIRS}}{T}\right|\right⌉$, and $\left⌈⋅\right⌉$ represents a round-up operation.

In a possible implementation, a slot index Kₛ for sending a physical uplink shared channel (physical uplink shared channel, PUSCH) in the third cell is determined based on the fifth offset value, the sixth offset value, the third offset value, and the fourth offset value. The slot index Kₛ satisfies: $\begin{matrix}{K}_{s} = \left⌊n⋅\frac{{2}^{{μ}_{PUSCH}}}{{2}^{{μ}_{PDCCH}}}\right⌋ + {K}_{2} + \left⌊{2}^{{μ}_{PUSCH}}⋅\left(\frac{{N}_{slot , offset , PDCCH}^{CA}}{{2}^{{μ}_{offset , PDCCH}}}-\frac{{N}_{slot , offset , PUSCH}^{CA}}{{2}^{{μ}_{offset , PUSCH}}}\right)\right⌋ \\ + \left⌊\left|\frac{{N}_{Ts , offset , PDCCH} - {N}_{Ts , offset , PUSCH}}{T}\right|\right⌋\end{matrix}$

n represents a slot index of a PDCCH carrying DCI, where the PDCCH is sent in the fifth cell; µ_{PUSCH} represents an SCS index of the PUSCH, where the PUSCH scheduled by the DCI is sent in the third cell; µ_{PDCCH} represents an SCS index of the PDCCH; K₂ represents a quantity of slots between the PDCCH and the PUSCH, with an SCS that corresponds to the PUSCH being used as a reference; ${N}_{slot , offset , PDCCH}^{CA}$ represents the fifth offset value; ${N}_{slot , offset , PUSCH}^{CA}$ represents the third offset value; µ_{offset,PDCCH} represents a maximum value between a minimum SCS in an SCS set of the sixth cell and a minimum SCS in an SCS set of a fifth cell; µ_{offset,PUSCH} represents a maximum value between a minimum SCS in an SCS set of the fourth cell and a minimum SCS in an SCS set of the third cell; *N*_{Ts,offset,PDCCH} represents the sixth offset value; *N*_{Ts,offset,PUSCH} represents the fourth offset value; *T* represents a quantity of Ts included in a slot with a maximum length among slots corresponding to the SCS of the PUSCH or a quantity of Ts included in a slot with a minimum length among slots corresponding to the SCS of the PUSCH; $\left⌊⋅\right⌋$ represents a round-down operation; and |·| represents an operation of obtaining an absolute value.

Optionally, $\left⌊\left|\frac{{N}_{Ts , offset , PDCCH} - {N}_{Ts , offset , PUSCH}}{T}\right|\right⌋$ in the foregoing embodiment may also be replaced with $\left⌈\left|\frac{{N}_{Ts , offset , PDCCH} - {N}_{Ts , offset , PUSCH}}{T}\right|\right⌉$, and $\left⌈⋅\right⌉$ represents a round-up operation.

In a possible implementation, a slot index Kₛ for sending a channel sounding reference signal (sounding reference signal, SRS) in the third cell is determined based on the fifth offset value, the sixth offset value, the third offset value, and the fourth offset value. The slot index Kₛ satisfies: $\begin{matrix}{K}_{s} = \left⌊n⋅\frac{{2}^{{μ}_{SRS}}}{{2}^{{μ}_{PDCCH}}}\right⌋ + k + \left⌊{2}^{{μ}_{SRS}}⋅\left(\frac{{N}_{slot , offset , PDCCH}^{CA}}{{2}^{{μ}_{offset , PDCCH}}}-\frac{{N}_{slot , offset , SRS}^{CA}}{{2}^{{μ}_{offset , SRS}}}\right)\right⌋ \\ + \left⌊\left|\frac{{N}_{Ts , offset , PDCCH} - {N}_{Ts , offset , SRS}}{T}\right|\right⌋\end{matrix}$

n represents a slot index of a PDCCH carrying DCI, where the PDCCH is sent in the fifth cell; µ_{SRS} represents an SCS index of the SRS, where the SRS triggered by the DCI is sent in the third cell; µ_{PDCCH} represents an SCS index of the PDCCH; k represents a quantity of slots between the PDCCH and the SRS, with an SCS that corresponds to the SRS being used as a reference; ${N}_{slot , offset , PDCCH}^{CA}$ represents the fifth offset value; ${N}_{slot , offset , SRS}^{CA}$ represents the third offset value; µ_{offset,PDCCH} represents a maximum value between a minimum SCS in an SCS set of the sixth cell and a minimum SCS in an SCS set of the fifth cell; µ_{offset,SRS} represents a maximum value between a minimum SCS in an SCS set of the fourth cell and a minimum SCS in an SCS set of the third cell; *N*_{Ts,offset,PDCCH} represents the sixth offset value; *N*_{Ts,offset,SRS} represents the fourth offset value; *T* represents a quantity of Ts included in a slot with a maximum length among slots corresponding to the SCS of the SRS or a quantity of Ts included in a slot with a minimum length among slots corresponding to the SCS of the SRS; $\left⌊⋅\right⌋$ represents a round-down operation; and |·| represents an operation of obtaining an absolute value.

Optionally, $\left⌊\left|\frac{{N}_{Ts , offset , PDCCH} - {N}_{Ts , offset , SRS}}{T}\right|\right⌋$ in the foregoing embodiment may also be replaced with $\left⌈\left|\frac{{N}_{Ts , offset , PDCCH} - {N}_{Ts , offset , SRS}}{T}\right|\right⌉$, and $\left⌈⋅\right⌉$ represents a round-up operation.

It may be understood that this embodiment of this application is not limited to a CA scenario, and is also applicable to another scenario (for example, a scenario with a plurality of carriers or a plurality of cells).

Corresponding to the methods provided in the foregoing method embodiments, embodiments of this application further provide corresponding apparatuses, including corresponding modules configured to execute the foregoing embodiments. The modules may be software, hardware, or a combination of software and hardware.

FIG. 4 is a diagram of a structure of a terminal. The terminal is applicable to the scenario shown in FIG. 1. The terminal or a module in the terminal may perform the method 300 and various possible implementations. For ease of description, FIG. 4 shows only main modules of the terminal. As shown in FIG. 4, the terminal 400 includes a processor, a memory, a control circuit, an antenna, and an input/output apparatus. The processor is mainly configured to: process a communication protocol and communication data, control the entire terminal, execute a software program, and process data of the software program. The memory is mainly configured to store the software program and data. A radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the terminal is powered on, the processor may read a software program in a storage unit, interpret and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in the form of an electromagnetic wave through the antenna. When data is sent to the terminal, the radio frequency circuit receives the radio frequency signal through the antenna, converts the radio frequency signal into a baseband signal, and outputs the baseband signal to the processor. The processor converts the baseband signal into data, and processes the data.

For ease of description, FIG. 4 shows only one memory and one processor. In an actual terminal, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to: control the entire terminal device, execute the software program, and process data of the software program. The processor in FIG. 4 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal may include a plurality of baseband processors to adapt to different network standards, the terminal may include a plurality of central processing units to enhance a processing capability of the terminal, and modules of the terminal may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have receiving and sending functions may be considered as a transceiver unit 411 of the terminal 400, and the processor that has a processing function may be considered as a processing unit 412 of the terminal 400. As shown in FIG. 4, the terminal 400 includes the transceiver unit 411 and the processing unit 412. The transceiver unit may also be referred to as a transceiver, a transceiver machine, a transceiver apparatus, or the like. Optionally, a component that is in the transceiver unit 411 and that is configured to implement a receiving function may be considered as a receiving unit, and a component that is in the transceiver unit 411 and that is configured to implement a sending function may be considered as a sending unit. In other words, the transceiver unit 411 includes the receiving unit and the sending unit. For example, the receiving unit may also be referred to as a receiver, a receiver machine, a receiving circuit, or the like, and the sending unit may also be referred to as a transmitter, a transmitter machine, a transmitting circuit, or the like. Optionally, the receiving unit and the sending unit may be one integrated unit, or may be a plurality of independent units. The receiving unit and the sending unit may be in one geographical position, or may be distributed in a plurality of geographical positions.

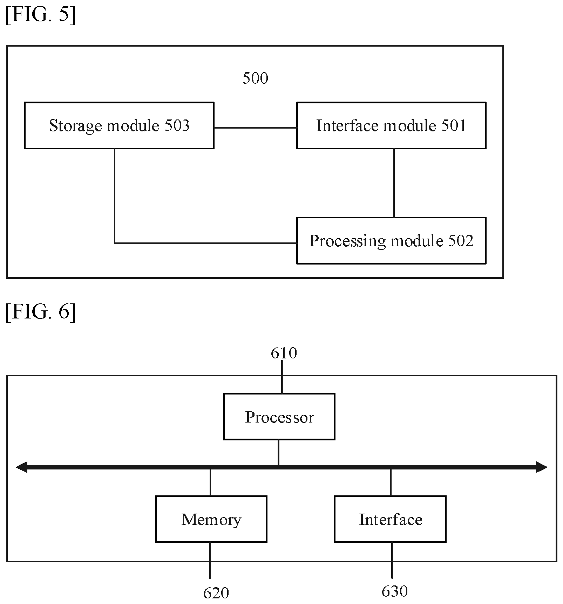

As shown in FIG. 5, another embodiment of this application provides an apparatus 500. The apparatus may be a terminal, or may be a module (for example, an integrated circuit or a chip) used in the terminal. Alternatively, the apparatus may be a radio access network device, may be a module (for example, an integrated circuit or a chip) used in the radio access network device, or may be a logical node, a logical module, or software that can implement all or some functions of the radio access network device. The apparatus may alternatively be another communication module. For example, the apparatus 500 may implement functions of the radio access network device in the method 300 and various possible implementations, or the apparatus 500 may implement functions of the terminal in the method 300 and various possible implementations. The apparatus 500 may include an interface module 501 (or referred to as an interface unit) and a processing module 502 (or referred to as a processing unit), and may further include a storage module 503 (or referred to as a storage unit).

In a possible design, one or more modules in FIG. 5 may be implemented by one or more processors, may be implemented by one or more processors and memories, may be implemented by one or more processors and transceivers, or may be implemented by one or more processors, memories, and transceivers. This is not limited in embodiments of this application. The processor, the memory, and the transceiver may be separately disposed, or may be integrated.

The apparatus has a function of implementing the terminal described in embodiments of this application. For example, the apparatus includes a corresponding module, unit, or means (means) used for the terminal to perform the steps related to the terminal that are described in embodiments of this application. The function, the unit, or the means may be implemented by software or hardware, may be implemented by hardware executing corresponding software, or may be implemented by a combination of software and hardware. For details, refer to the corresponding descriptions in the foregoing corresponding method embodiments. Alternatively, the apparatus has a function of implementing the radio access network device described in embodiments of this application. For example, the apparatus includes a corresponding module, unit, or means used for the radio access network device to perform the steps related to the radio access network device described in embodiments of this application. The function, the unit, or the means may be implemented by software or hardware, may be implemented by hardware executing corresponding software, or may be implemented by a combination of software and hardware. For details, refer to the corresponding descriptions in the foregoing corresponding method embodiments.

In a possible design, the apparatus 500 includes the interface module 501 and the processing module 502. For example, the apparatus 500 may be a terminal, may be a module (for example, a processor, a chip, or a chip system) used in the terminal, or may be a logical node, a logical module, or software that can implement all or some functions of the terminal. The interface module 501 is configured to receive offset indication information. The offset indication information indicates a first offset value x and a second offset value y. The first offset value x is an offset at slot slot granularity, the second offset value y is an offset at Ts granularity, and Ts = 1/(15 * 10³ * 2048) seconds. The processing module 502 is configured to determine a time offset between a second cell and a first cell based on the offset indication information. For details about the apparatus 500, refer to the corresponding descriptions in the foregoing corresponding method embodiment.

In a possible design, the apparatus 500 includes the interface module 501 and the processing module 502. For example, the apparatus 500 may be a radio access network device, may be a module (for example, a processor, a chip, or a chip system) used in the radio access network device, or may be a logical node, a logical module, or software that can implement all or some functions of the radio access network device. The processing module 502 is configured to determine offset indication information. The offset indication information indicates a first offset value x and a second offset value y. The first offset value x is an offset at slot slot granularity, the second offset value y is an offset at Ts granularity, Ts = 1/(15 * 10³ * 2048) seconds, and the offset indication information indicates a time offset between a second cell and a first cell. The interface module 501 is configured to send the offset indication information. For details about the apparatus 500, refer to the corresponding descriptions in the foregoing corresponding method embodiment.

It may be understood that, for beneficial effects of the apparatus 500 and various possible implementations, refer to the descriptions in the foregoing method embodiments or the summary. Details are not described herein again.

Optionally, the apparatus 500 may further include the storage module 503, configured to store data or instructions (which may also be referred to as code or a program). The other modules may interact with or be coupled to the storage module, to implement a corresponding method or function. For example, the processing module 502 may read the data or the instructions in the storage module 503, to enable the apparatus 500 to implement the method in the foregoing embodiments.

In an example, a module in the apparatus may be one or more integrated circuits configured to implement the foregoing method, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these integrated circuit forms. For another example, when the module in the apparatus may be implemented in a form of scheduling a program by the processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SoC).

FIG. 6 is a diagram of an apparatus according to an embodiment of this application. The apparatus may be configured to implement the method 300 and various possible implementations. As shown in FIG. 6, the apparatus includes a processor 610 and an interface 630, and the processor 610 is coupled to the interface 630. The interface 630 is configured to communicate with another module or device. The interface 630 may be a transceiver or an input/output interface. The interface 630 may be, for example, an interface circuit. Optionally, the apparatus further includes a memory 620, configured to: store instructions executed by the processor 610, store input data required by the processor 610 to run the instructions, or store data generated by running the instructions by the processor 610.

The method 300 and various possible implementations may be implemented by the processor 610 by invoking a program or the instructions stored in the memory 620. The memory 620 may be inside the apparatus, or may be outside the apparatus. This is not limited in this application.

Optionally, functions/implementation processes of the interface module 501 and the processing module 502 in FIG. 5 may be implemented by the processor 610 in the apparatus shown in FIG. 6. Alternatively, a function/an implementation process of the processing module 502 in FIG. 5 may be implemented by the processor 610 in the apparatus shown in FIG. 6, and a function/an implementation process of the interface module 501 in FIG. 5 may be implemented by the interface 630 in the apparatus shown in FIG. 6. For example, the function/implementation process of the interface module 501 may be implemented by the interface 630 that is driven by the processor by invoking program instructions in the memory.

When the apparatus is a chip used in a terminal, the chip in the terminal implements functions of the terminal in the foregoing method embodiment. The chip receives information from another module (for example, a radio frequency module or an antenna) in the terminal, where the information is from another terminal or a radio access network device. Alternatively, the chip sends information to another module (for example, a radio frequency module or an antenna) in the terminal, where the information is sent by the terminal to another terminal or a radio access network device.

When the apparatus is a chip used in the radio access network device, the chip implements functions of the radio access network device in the foregoing method embodiment. The chip receives information from another module (for example, a radio frequency module or an antenna) in the radio access network device, where the information is from another radio access network device or a terminal. Alternatively, the chip sends information to another module (for example, a radio frequency module or an antenna) in the radio access network device, where the information is sent by the radio access network device to another radio access network device or a terminal.

A person of ordinary skill in the art may understand that various numbers such as first and second in this application are merely used for differentiation for ease of description, and are not used to limit the scope of embodiments of this application or represent a sequence. The term "and/or" describes an association relationship between associated objects and indicates that three relationships may exist. For example, A and/or B may indicate the following three cases: Only A exists, both A and B exist, and only B exists. In the text descriptions of this application, the character "/" usually indicates an "or" relationship between the associated objects. In a formula in this application, the character "/" indicates a "division" relationship between the associated objects. "At least one" means one or more. "At least two" means two or more. "At least one", "any one", or a similar expression thereof indicates any combination of the items, and includes a singular item (piece) or any combination of plural items (pieces). For example, at least one of a, b, or c may indicate: a, b, c, a and b, a and c, b and c, or a, b, and c, where a, b, and c may be singular or plural. "A plurality of" means two or more, and another quantifier is similar to this.

It should be understood that, in the embodiments of this application, sequence numbers of the foregoing processes do not mean execution sequences. The execution sequences of the processes should be determined according to functions and internal logic of the processes, and should not be construed as any limitation on the implementation processes of embodiments of this application.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

Steps of the methods described in embodiments of this application may be directly embedded into hardware, a software unit executed by the processor, or a combination thereof. The software unit may be stored in a random access memory (random access memory, RAM), a flash memory, a read-only memory (read-only memory, ROM), a register, a hard disk, a removable disk, or a storage medium in any other form in the art. For example, the storage medium may be connected to a processor so that the processor may read information from the storage medium and write information to the storage medium. Alternatively, the storage medium may be integrated into a processor. The processor and the storage medium may be disposed in an ASIC.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented. For same or similar parts in embodiments of this application, refer to each other. In embodiments of this application and implementations/methods/implementation methods of embodiments, unless otherwise specified or a logical conflict occurs, terms and/or descriptions in different embodiments and implementations/methods/implementation methods of embodiments are consistent and may be mutually referenced. Technical features in different embodiments and implementations/methods/implementation methods of embodiments may be combined to form a new embodiment, implementation, method, or implementation method based on an internal logical relationship between the technical features. The foregoing descriptions are implementations of this application, but are not intended to limit the protection scope of this application.

## Claims

1. A communication method, comprising:
receiving offset indication information, wherein the offset indication information indicates a first offset value x and a second offset value y, the first offset value x is a time domain offset at slot slot granularity, the second offset value y is a time domain offset at Ts granularity, and Ts = 1/(15 ∗ 10³ ∗ 2048) seconds; and
determining a time offset between a second cell and a first cell based on the offset indication information.

2. The method according to claim 1, wherein the offset indication information comprises first indication information and second indication information, the first indication information indicates the first offset value x, the second indication information indicates the second offset value y, and determining the time offset between the second cell and the first cell based on the offset indication information comprises:
determining the time offset between the second cell and the first cell based on the first indication information and the second indication information.

3. The method according to claim 1 or 2, wherein a maximum value of the second offset value y is a quantity of Ts contained in a slot corresponding to a reference subcarrier spacing SCS, and the reference SCS is a maximum value between a minimum SCS in an SCS set of the first cell and a minimum SCS in an SCS set of the second cell.

4. The method according to claim 3, wherein when a combination of the minimum SCS in the SCS set of the first cell and the minimum SCS in the SCS set of the second cell is not {60 kHz, 60 kHz} or {120 kHz, 120 kHz}:
if a minimum SCS in an SCS set of a primary cell PCell/a primary secondary cell PSCell is less than or equal to a minimum SCS in an SCS set of a secondary cell SCell, then Ts 0 of a slot 0 of the first cell is aligned with Ts y of a slot ((-1*x) mod M) of the second cell, wherein the first cell is the PCell/PSCell and the second cell is the SCell; or
if a minimum SCS in an SCS set of a PCell/PSCell is greater than a minimum SCS in an SCS set of an SCell, then Ts 0 of a slot 0 of the first cell is aligned with Ts y of a slot (x mod M) of the second cell, wherein the first cell is the SCell and the second cell is the PCell/PSCell; and
mod represents a modulo operation, M represents a quantity of slots contained in a frame, and a time domain length of the slot is determined based on the reference SCS.

5. The method according to claim 3, wherein when a combination of the minimum SCS in the SCS set of the first cell and the minimum SCS in the SCS set of the second cell is {60 kHz, 60 kHz} or {120 kHz, 120 kHz}:
if a frequency domain position of a point A of a primary cell PCell/a primary secondary cell PSCell is lower than a frequency domain position of a point A of a secondary cell SCell, then Ts 0 of a slot 0 of the first cell is aligned with Ts y of a slot ((-1*x) mod M) of the second cell, wherein the first cell is the PCell/PSCell and the second cell is the SCell; or
if a frequency domain position of a point A of a PCell/PSCell is higher than a frequency domain position of a point A of an SCell, then Ts 0 of a slot 0 of the first cell is aligned with Ts y of a slot (x mod M) of the second cell, wherein the first cell is the SCell and the second cell is the PCell/PSCell; and
mod represents a modulo operation, M represents a quantity of slots contained in a frame, and a time domain length of the slot is determined based on the reference SCS.

6. A communication method, comprising:
determining offset indication information, wherein the offset indication information indicates a first offset value x and a second offset value y, the first offset value x is an offset at slot slot granularity, the second offset value y is an offset at Ts granularity, Ts = 1/(15 ∗ 10³ ∗ 2048) seconds, and the offset indication information indicates a time offset between a second cell and a first cell; and
sending the offset indication information.

7. The method according to claim 6, wherein the offset indication information comprises first indication information and second indication information, the first indication information indicates the first offset value x, the second indication information indicates the second offset value y, and that the offset indication information indicates the time offset between the second cell and the first cell comprises:
the first indication information and the second indication information indicate the time offset between the second cell and the first cell.

8. The method according to claim 6 or 7, wherein a maximum value of the second offset value y is a quantity of Ts contained in one slot corresponding to a reference subcarrier spacing SCS, and the reference SCS is a maximum value between a minimum SCS in an SCS set of the first cell and a minimum SCS in an SCS set of the second cell.

9. The method according to claim 8, wherein when a combination of the minimum SCS in the SCS set of the first cell and the minimum SCS in the SCS set of the second cell is not {60 kHz, 60 kHz} or {120 kHz, 120 kHz}:
if a minimum SCS in an SCS set of a primary cell PCell/a primary secondary cell PSCell is less than or equal to a minimum SCS in an SCS set of a secondary cell SCell, then Ts 0 of a slot 0 of the first cell is aligned with Ts y of a slot ((-1*x) mod M) of the second cell, wherein the first cell is the PCell/PSCell and the second cell is the SCell; or
if a minimum SCS in an SCS set of a PCell/PSCell is greater than a minimum SCS in an SCS set of an SCell, then Ts 0 of a slot 0 of the first cell is aligned with Ts y of a slot (x mod M) of the second cell, wherein the first cell is the SCell and the second cell is the PCell/PSCell; and
mod represents a modulo operation, M represents a quantity of slots contained in a frame, and a time domain length of the slot is determined based on the reference SCS.

10. The method according to claim 8, wherein when a combination of the minimum SCS in the SCS set of the first cell and the minimum SCS in the SCS set of the second cell is {60 kHz, 60 kHz} or {120 kHz, 120 kHz}:
if a frequency domain position of a point A of a primary cell PCell/a primary secondary cell PSCell is lower than a frequency domain position of a point A of a secondary cell SCell, then Ts 0 of a slot 0 of the first cell is aligned with Ts y of a slot ((-1*x) mod M) of the second cell, wherein the first cell is the PCell/PSCell and the second cell is the SCell; or
if a frequency domain position of a point A of a PCell/PSCell is higher than a frequency domain position of a point A of an SCell, then Ts 0 of a slot 0 of the first cell is aligned with Ts y of a slot (x mod M) of the second cell, wherein the first cell is the SCell and the second cell is the PCell/PSCell; and
mod represents a modulo operation, M represents a quantity of slots contained in a frame, and a time domain length of the slot is determined based on the reference SCS.

11. A communication apparatus, comprising a processor, wherein the processor is coupled to a memory, the memory is configured to store a program or instructions, and when the program or the instructions are executed by the processor, the apparatus is enabled to perform the method according to any one of claims 1 to 5, or the apparatus is enabled to perform the method according to any one of claims 6 to 10.

12. A computer-readable storage medium, wherein the computer-readable storage medium stores instructions, and when the instructions are executed, the method according to any one of claims 1 to 5 is performed, or the method according to any one of claims 6 to 10 is performed.

13. A computer program product, comprising computer program code, wherein when the computer program code is run, the method according to any one of claims 1 to 5 is implemented, or the method according to any one of claims 6 to 10 is implemented.
